# EUROPEAN PATENT APPLICATION

(11) **EP 1 377 122 A2**
(43) Date of publication of application: **02.01.2004**
(21) Application number: 03253505.6
(22) Date of filing: 04.06.2003
(51) Int. Cl.: H04S 1/00

(54) **Sound data delay unit**

(30) Priority: 27.06.2002 JP 2002187931
(71) Applicant: FUJITSU LIMITED, Kawasaki-shi, Kanagawa 211-8588 (JP)
(72) Inventor: Hirano, Takashi, Kawasaki-shi, Kanagawa 211-8588 (JP); Mukaida, Kenji, Kawasaki-shi, Kanagawa 211-8588 (JP)
(74) Representative: Stebbing, Timothy Charles

(57) **Abstract**

There is provided a sound data delay unit (10) for delaying sound data of a plurality of channels (0-n) in a single memory area (1), wherein, when a delay amount assigned to each channel is input into an address information generator (2-0 - 2-n), the address information generator generates address information for assigning a storage area of the sound data for each channel in the memory (1), and a selector (4) inputs the address information into the memory (1) with respect to each channel and assigns the storage area for each channel.

## Description

The present invention relates to a sound data delay unit for delaying input sound data, more specifically to a sound data delay unit for delaying the sound data input through a plurality of channels.

What we hear in the natural world is not only sounds reaching our ears directly from their sources but also sounds initially reflected e.g. reflected from the walls and ceiling of a room, to be heard with a slight delay, and post reverberant sounds repeating complex reflections as they die away. Through these various kinds of sounds, we can perceive the width and shape of the place where we are.

In recent years, in order to reproduce the above phenomena, an audio system, in which the sound data input through a plurality of channels is delayed for a predetermined time with respect to each channel, thereby delaying the sound outputs from speakers to create effects or "presence", is becoming popular not only among theaters, such as a movie theater, but also in domestic houses.

For instance, "Dolby Digital (AC-3)", a home cinema audio encoding technique, which has been employed as a standard format of sound signals of DVD, has 5.1 channels, that is, five channels including three front channels and two rear channels, and an additional channel exclusively for low-pitched sounds, "LFE (Low Frequency Effect)". The sound data transmitted through 5.1 channels are reproduced in the form of completely independent sounds through the use of a digital compression technology. This structure makes it possible to recreate even the sound of an arrow flying from the left rear toward the right front.

A conventional method for delaying sounds will be described below.

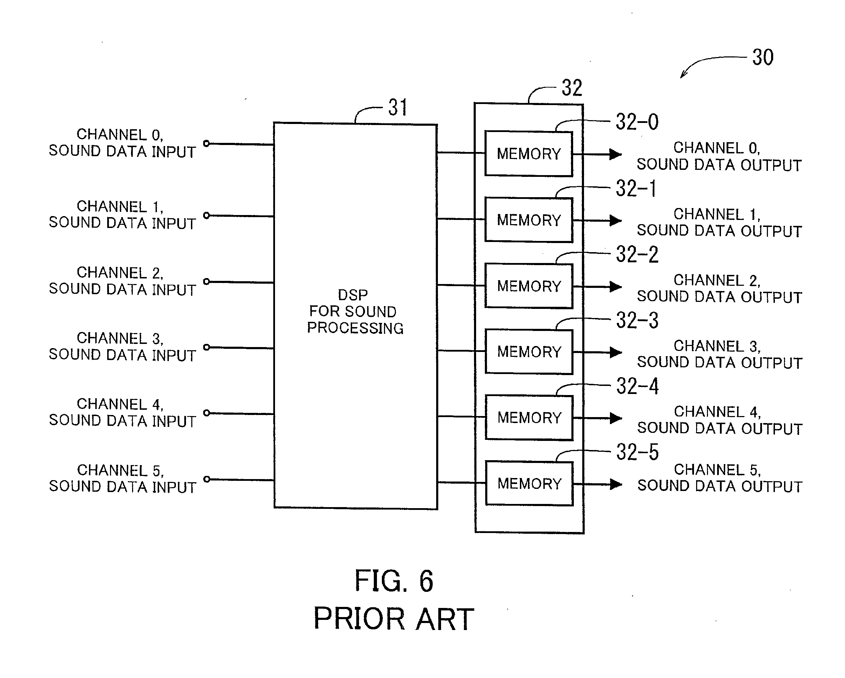

Fig. 6 schematically shows the structure of a conventional sound data delay unit of a six channel-input type.

The sound data delay unit 30 shown in Fig. 6 may be incorporated into, for example, a DVD decoder chip.

Fig. 6 also illustrates for explanation a DSP (Digital Signal Processor) 31 for sound processing, which may be unrelated to the delay processing of sound data. The DSP 31 has channels connected with their respective memories for the purpose of delaying the sound data to be output.

The digitally compressed sound data input into the DSP 31 is decoded into PCM (Pulse Code Modulation) data, and output to memories 32-0 to 32-5 located for the respective channels. The memories 32-0 to 32-5 store and output the sound data only by the predetermined delay amount.

Since the conventional sound data delay unit 30 is provided with memories 32-0 to 32-5 individually in accordance with the number of data channels, it has the following disadvantages.

The maximum value of the delay amount for each channel is determined on the basis of the capacity of each of the memories 32-0 to 32-5. Therefore, even if the memory capacity is not used to the maximum in some channels, in other words, no matter how much extra memory capacity is left in some channels, it is not possible to utilize the area of the extra memory capacity for the other channels. Consequently, it is required to provide the capacity in accordance with the maximum value of the delay amount that all the memories of all the channels can carry.

Moreover, in the case that the delay amount is changed, it is necessary to erase (hereinafter referred to as flash) a data storage area, which causes the problem that the output of data from the memories is once markedly interrupted.

It is therefore desirable to provide a sound data delay unit capable of delaying sound data of a plurality of channels in a single memory area.

According to the invention there is provided a sound data delay unit for delaying outputs of sound data input through a plurality of channels. The sound data delay unit comprises a memory for temporarily storing the sound data, a plurality of address information generators each for receiving a delay amount assigned to a channel and generating address information for assigning a sound data storage area for the channel in the memory on the basis of the delay amount, a first selector for selecting from the channels the sound data to be input into the memory, a second selector for selecting the address information to be input into the memory, a distributor for distributing to each channel the sound data stored in the memory and corresponding to the respective channels, and a controller for controlling at least the memory, the first selector, the second selector and the distributor.

The above and other features and advantages of the present invention will become apparent from the following description when taken in conjunction with the accompanying drawings which illustrate preferred embodiments of the present invention by way of example only. In the drawings:
Fig. 1 is a view showing a basic structure of a sound data delay unit according to an embodiment of the present invention.
Fig. 2 is a view showing the structure of the sound data delay unit according to the above embodiment of the present invention.
Fig. 3 is a view showing a structure of an address counter.
Fig. 4 is a diagram showing connections of the address counters and sending and receiving of address information.
Fig. 5 is a view showing storage areas in a memory in an initial state.
Fig. 6 is a view showing a general structure of a conventional sound data delay unit of a six channel-input type.
Embodiments of the present invention will be described below with reference to the drawings, for example only.

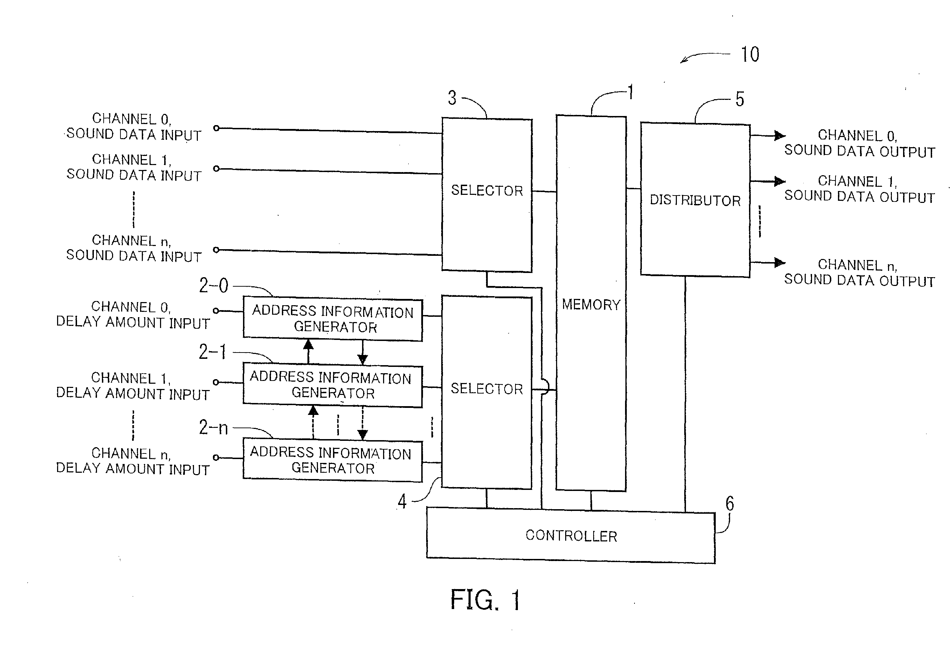

Fig. 1 shows a basic structure of a sound data delay unit according to an embodiment of the present invention.

A sound data delay unit (audio signal delay processor) 10 comprises a memory 1 for temporarily storing sound data such as PCM data, address information generators 2-0 to 2-n (n is a natural number other than 0) for generating address information for assigning a sound data storage area for each channel, a selector 3 for selecting from a plurality of channels the sound data to be input into the memory 1, a selector 4 for selecting the address information to be input into the memory 1, a distributor 5 for distributing to each channel the sound data stored in the memory 1 and corresponding to the respective channels, and a controller 6 for controlling the memory 1, the selector 3, the selector 4 and the distributor 5.

The address information generators 2-0 to 2-n receive delay amounts assigned to each channel and generate address information for assigning the storage area of sound data for each channel stored in the memory 1, based on the delay amounts.

The delay amount is input for each channel, for example, by a user's operating an input unit (e.g. remote control), not shown.

The address information includes, for example, a write address and read address of each channel and pointers indicative of these addresses. Difference between a write pointer and a read pointer is the delay amount. Details will be given below.

The selector 3 has a function of selecting sound data from channels 0 to n and inputting the selected sound data into the memory 1 under the control of the controller 6.

The selector 4 has a function of selecting address information from the address information generators 2-0 to 2-n and inputting the selected address information into the memory 1 under the control of the controller 6.

The distributor 5 has a function of retrieving the sound data stored in the memory 1 and distributing the sound data to each channel under the control of the controller 6.

The workings of the sound data delay unit 10 will be explained below.

When sound data is input through the channels 0 to n into the selector 3, the address information generators 2-0 to 2-n generate the address information for assigning the storage areas for storing the sound data in the memory 1 on the basis of the delay amount input through each channel, and input the address information into the selector 4 under the control of the controller 6. The selector 4, under the control of the controller 6, selects the address information in the address information generators 2-0 to 2-n, inputs the address information into the memory 1, and assigns the storage area for temporarily storing the sound data of each channel. On the other hand, after the selector 3 selects the channels to be input into the memory 1, the sound data is input into the storage areas assigned on the basis of the address information with respect to each channel under the control of the controller 6.

Unlike conventional ways, in the present invention, channels are not provided each with a respective memory to delay sound data, but the sound data of the channels is stored in the single memory 1 by using the address information generated on the basis of the delay amount assigned to each channel. Therefore, it is possible to use memory capacity effectively.

Details of the sound data delay unit according to the embodiment of the present invention will be explained below.

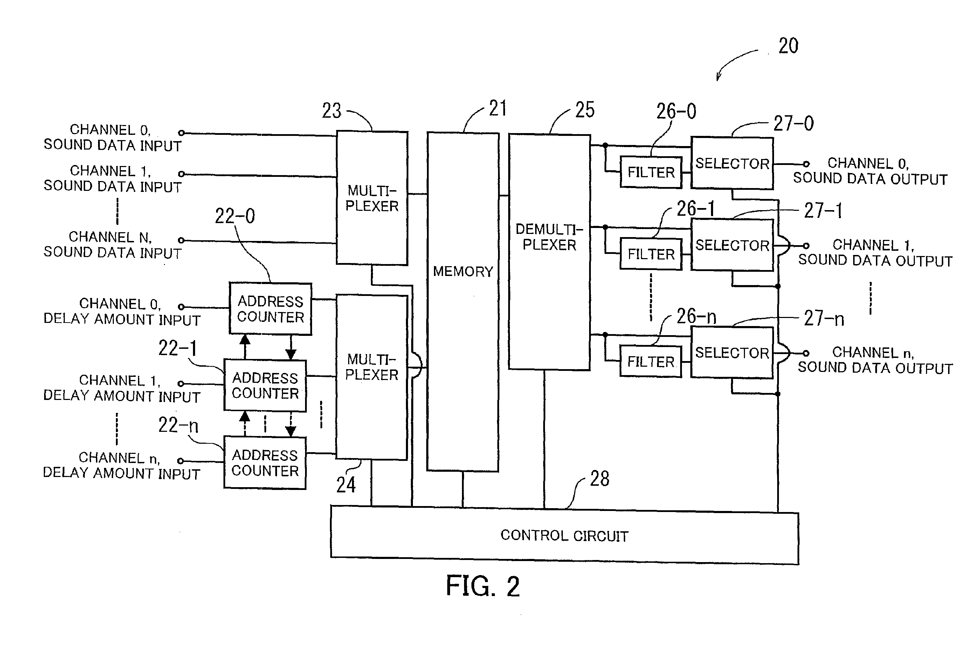

Fig. 2 illustrates the structure of the sound data delay unit according to the embodiment of the present invention.

A sound data delay unit 20 comprises a memory 21 for temporarily storing sound data, address counters 22-0 to 22-n receiving the delay amount assigned to each channel, and based on the delay amount, generating the address information for assigning a sound data storage area for each channel in the memory 21, a multiplexer 23 for selecting the sound data to be input into the memory 21 from the channels, a multiplexer 24 for selecting the address information to be input into the memory 21, a demultiplexer 25 for distributing to each channel the sound data stored in the memory 21 and corresponding to the respective channels, filters 26-0 to 26-n for smoothing the sound data which has been distributed and retrieved, selectors 27-0 to 27-n for determining whether or not outputs have passed through the respective filters 26-0 to 26-n, and a control circuit 28 for controlling the memory 21, the multiplexers 23 and 24, the demultiplexer 25, and the selectors 27-0 to 27-n.

The sound data delay unit 20 with the above structure is part of, for example, a decoder chip in a DVD player. The channels for the sound data to be input are connected to, for instance, a DSP, not shown, and the sound data decoded into PCM data in the DSP are input into the sound data delay unit 20.

Here, the memory 21 corresponds to the memory 1 shown in Fig. 1, the address counters 22-0 to 22-n to the address information generators 2-0 to 2-n in Fig. 1, the multiplexer 23 to the selector 3, the multiplexer 24 to the selector 4, the demultiplexer 25 to the distributor 5, and the control circuit 28 to the controller 6.

The memory 21 is connected with the multiplexers 23 and 24, the demultiplexer 25 and the control circuit 28, and has a function of temporarily storing the sound data input from the multiplexer 23 in the address assigned by the multiplexer 24, under the control of the control circuit 28. Moreover, the memory 21 has another function of outputting the stored sound data to the demultiplexer 25 under the control of the control circuit 28.

The address counters 22-0 to 22-n generate the address information for assigning the storage areas for temporarily storing the sound data in the memory 21, based on the delay amount input through each channel. Details will be described below.

The delay amount can be appropriately determined with respect to each channel. For instance, a user or the like may delay a channel 0 for 1 msec, and a channel 1 for 2 msec by operating an input unit, not shown. The determined delay time is stored in a register or the like, not shown.

The sound data is input into the multiplexer 23 through the channels, and the multiplexer 23 selects channels and inputs the corresponding sound data into the memory 21 under the control of the control circuit 28.

The multiplexer 24 selects the address information generated by the address counters 22-0 to 22-n corresponding to the respective channels and inputs the address information into the memory 21.

The demultiplexer 25 distributes the sound data of the channels, which has been stored in the memory 21, to each channel under the control of the control circuit 28.

The filters 26-0 to 26-n have a function of smoothing the sound to be output based on the sound data.

The selectors 27-0 to 27-n determine whether or not the outputs have passed through the filters 26-0 to 26-n, under the control of the control circuit 28.

The control circuit 28 may be, for example, a CPU (Central Processing Unit), and controls the memory 21, the multiplexers 23 and 24, the demultiplexer 25 and the selectors 27-0 to 27-n.

Descriptions about structures of the address counters 22-0 to 22-n and details of the address information will be given below.

The address counters 22-0 to 22-n have the same structures. Here, the Nth (N is a natural number other than 0) address counter 22-N is taken as an example for explanation.

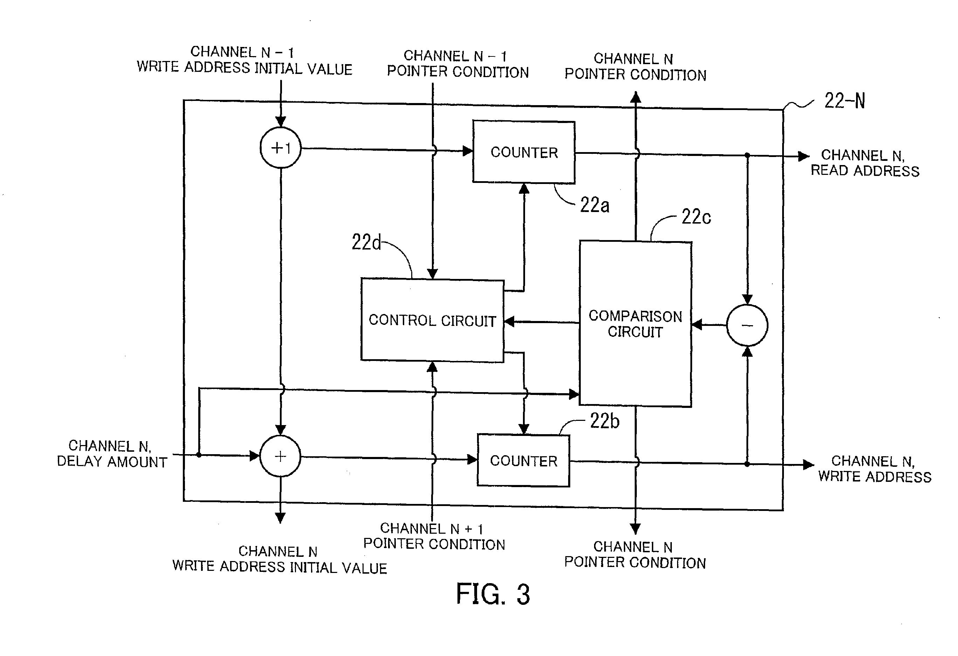

Fig. 3 shows the structure of the address counter.

The address counter 22-N includes counters 22a and 22b, a comparison circuit 22c, and a control circuit 22d.

In the embodiment of the present invention, the sound data is temporarily stored in the memory 21 to be delayed. At this moment, the address counter 22-N generates the address information for assigning the storage area for storing the sound data of a channel N within the memory 21. The explanation will be provided on the premise that the address information includes a write address, a read address, and a write and a read pointer indicative of these addresses.

The counter 22a operates under the control of the control circuit 22d and brings the read pointer to increment.

The counter 22b operates under the control of the control circuit 22d and brings the write pointer to increment.

The comparison circuit 22c constantly compares difference (indicative of a current delay amount) between the read pointer of the channel N and the write pointer thereof to be output with the delay amount of the channel N determined from without. Then, the comparison circuit 22c informs the result of the comparison to the control circuit 22d and also informs the same to the adjacent address counters 22-(N - 1) and 22-(N + 1) as a pointer condition of the channel N.

The control circuit 22d controls the counters 22a and 22b and receives the pointer conditions of the adjacent address counters 22-(N - 1) and 22-(N + 1). Also, the control circuit 22d receives the result of the comparison made by the comparison circuit 22c.

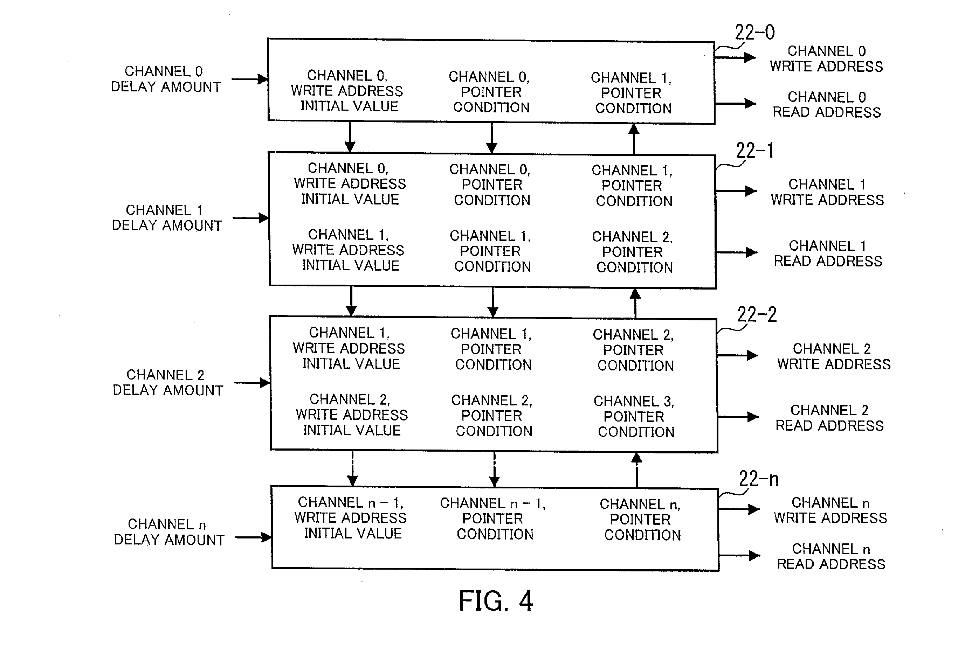

Fig. 4 is a diagram showing connections of the address counters and sending and receiving of the address information.

As illustrated in Fig. 4, the address counters 22-0 to 22-n are connected to one another. The address counter 22-0 sends an initial value of the write address of the channel 0 and the pointer condition of the channel 0 to the adjacent address counter 22-1, and receives the pointer condition of the channel 1 from the address counter 22-1.

The address counter 22-1 receives the initial value of the write address of the channel 0, the pointer condition of the channel 0 and the pointer condition of a channel 2, sends the pointer condition of the channel 1 to the channel 0, and sends the initial value of the write address of the channel 1 and the pointer condition of the channel 1 to the channel 2.

The address counter 22-2 operates in the same manner as the address counter 22-1. The last address counter 22-n receives the initial value of the write address and the pointer condition from an address counter 22-(n - 1), and sends the pointer condition of an address counter 22-n to the address counter 22-(n - 1).

Operation of the sound data delay unit 20 will be described below with reference to Figs. 2 and 3.

First, operation of the sound data delay unit 20 in the case that the delay amount is fixed will be explained.

In cases where the sound data of the channel N is delayed, the write address initial value of the channel N - 1 is input from the address counter 22-(N - 1) antecedent to the address counter 22-N, and the initial value incremented by 1 becomes the read pointer of the channel N. In case of an initial state, the read pointer is output as the read address of the channel N via the counter 22a. On the other hand, the write pointer of the channel N is obtained by adding to the channel 1 read pointer the data area corresponding to the delay amount of the channel N input from without and stored in, for example, a register, not shown. In the case of the initial state, the write pointer is output as the write address of the channel N via the counter 22b.

Thereafter, the multiplexer 24 selects the read address and write address of each channel, which have been generated in the address counters 22-0 to 22-n, with respect to each channel and inputs the selected address into the memory 21 under the control of the control circuit 28.

Channel storage areas of the memory 21 in the initial state, which are assigned on the basis of the read and write addresses as mentioned above, will be described below.

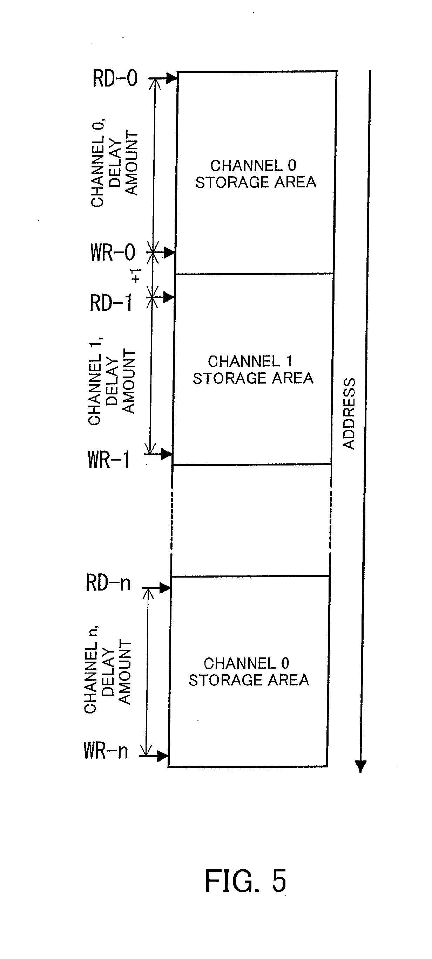

Fig. 5 shows the storage areas of the memory in the initial state.

As shown in Fig. 5, the areas for storing the sound data for each channel within the memory 21 are produced, the areas including the storage area of the channel 0 as a first area specified by the read address represented as read pointer RD-0 of the channel 0 and the write address represented as write pointer WR-0 of the channel 0 and the storage area of the channel n as a last area specified by the read address represented as read pointer RD-n of the channel n and the write address represented as write pointer WR-n of the channel n. An arrow on the right side on Fig. 5 indicates an address direction. Difference between the write pointer WR-0 and the read pointer RD-0 shows the delay amount of the channel 0, whereas difference between the write pointer WR-1 and the read pointer RD-1 indicates the delay amount of the channel 1. Moreover, difference between the write pointer WR-n and the read pointer RD-n shows the delay amount of the channel n.

After the sound data selected with respect to each channel by the multiplexer 23 is input into the storage areas, the sound data is written into the address assigned by the write pointer, and the stored sound data is read out from the address assigned by the read pointer with respect to each channel. When the new sound data is input into the storage areas, all the write pointers and read pointers are incremented by 1 by the counters 22a and 22b of the address counters 22-0 to 22-N in synchronization with the input of the sound data, and the sound data which has already been written by the write pointer in the antecedent step is read out by the read pointer. As a result, the difference between the write pointer and the read pointer is added to the input sound data as the delay time. Then, the sound data is read out and output with respect to each channel by the demultiplexer 25 under the control of the control circuit 28.

Next, operation of the sound data delay unit 20 in cases when the delay amount is increased and decreased will be explained.

If the delay amount assigned from outside during the delay operation of the sound data is increased (i.e. if the user sets a longer delay time), the number of times (frequency) to increment by 1 in synchronization with the input of the sound data is reduced to be less than normal (previously) only for the read pointer. Thus, time for reading out the sound data written into the address assigned by the write pointer is extended, resulting in an increase in the delay amount.

On the other hand, if the delay amount is decreased, the number of times (frequency) of increment of the write pointer is decreased to be less than normal. Since the read pointer is incremented by the normal number of times (frequency), time for reading out the sound data written into the address assigned by the write pointer is shortened, and thus the delay amount is reduced.

In any case, at the point when the delay amount reaches a desired value, the increment of the write pointer or read pointer is restored to the normal operation. Furthermore, during the change of the delay amount, the output from the memory 21 is discontinued. Therefore, while the delay amount is being altered, the outputs passing through the filters 26-0 to 26-n are selected by the selectors 27-0 to 27-n under the control of the control circuit 28 and subjected to a smoothing process in the filters 26-0 to 26-n. Then, the output is carried out (i.e. sound is generated from the sound data).

The filters 26-0 to 26-n comprise, for example, lowpass filters.

Described below is the detail of control of the write pointer and read pointer in the address counters 22-0 to 22-n.

First, the control of the pointer will be explained, taking the channel N as an example.

The control circuit 22d has a write pointer and a read pointer with respect to each channel. Here, notation for the write pointer of the channel N is represented as wr_addr_ch (N), and that for the read pointer rd_addr_ch (N). The delay amount of the channel N, which is input from without and stored in the register, not shown, is expressed as delay_ch (N) . Also, values shown in 2 bit form, which indicate the pointer conditions of the channel N, are represented as status0_ch (N) and status1_ch (N). In addition, it should be noticed that: N = 0, 1, ..., n - 1 or n.

There are the following three patterns in the predetermined delay amount and the delay amount with respect to each data input (each sampling frequency), and the bit indicative of the above pointer conditions is set on the following conditions.

In pattern 1, in case that the current delay amount = a set value, in other words, when the condition, wr_addr_ ch (N) - rd_addr_ch (N) = delay_ch (N), is satisfied, the pointer conditions will be set status0_ch (N) = 0 and status1_ch (N) = 0.

In pattern 2, in case that the current delay amount > the set value, in other words, when the condition, wr_addr_ch (N) - rd_addr_ch (N) > delay_ch (N) , is satisfied, the pointer conditions will be set status0_ch (N) = 1 and status1_ch (N) = 0.

In pattern 3, when the current delay amount < the set value, in other words, when the condition, wr_addr_ch (N) - rd_addr_ch (N) < delay_ch (N), is satisfied, the pointer conditions will be set status0_ch (N) = 0 and status1_ch (N) = 1.

The control of the pointer in the above three patterns will be explained next.

In the case of pattern 1, there is neither an increase nor a decrease in the storage areas. The control circuit 22d sends pointer control signals, specifically, wr_addr_ch (N) + = 1 and rd_addr_ch (N) + = 1, to the counters 22a and 22b. The counters 22a and 22b increment each pointer by 1 in synchronization with the input data.

In the case of pattern 2, since the current delay amount is larger than the predetermined delay amount, the increment of the write pointer is stopped, and the delay amount is reduced. At this point, the control circuit 22d transmits pointer control signals, namely, wr_addr_ch (N) + = 0 and rd_addr_ch (N) + = 1, to the counters 22a and 22b. Consequently, the counter 22a comes to a halt, whereas the counter 22b increments the read pointer by 1 in synchronization with the input data as usual.

In the case of pattern 3, the current delay amount is smaller than the predetermined delay amount, so that the increment of the read pointer comes to a pause, and the delay amount is increased. At this moment, the control circuit 22d gives pointer control signals, that is, wr_ addr_ ch (N) + = 1 and rd_addr_ch (N) + = 0, to the counters 22a and 22b. Thus, the counter 22a is brought to a halt, while the counter 22b routinely increments the write pointer by 1 in synchronization with the input data.

The foregoing explains the control of the pointer in only the case of the channel N.

However, if the pointer is controlled focusing only on the channel N as described above, and the adjacent channels, namely, the channel N - 1 and a channel N + 1 are left out of account, there may occur problems that the sound data of the channel N is overwritten with those of the adjacent channels, and on the contrary, that the data of the adjacent channels is overwritten with those of the channel N. In order to avoid these problems, it is necessary to control the pointer in consideration of activities of the adjacent channels.

Therefore, the control of the pointer in light of the channels adjacent to the channel N will be explained.

In a case that the delay amount is increased with respect to the channel N - 1, a relation between each pointer and the delay amount of the channel N - 1 becomes wr_addr_ch (N - 1) - rd_addr_ch (N - 1) < delay_ch (N-1), and the pointer conditions are status0_ch (N - 1) = 0 and status1 ch (N - 1) = 1. Accordingly, the control circuit 22d of the address counter 22-(N - 1) transmits pointer control signals, wr_addr_ch (N - 1) + = 1 and rd_addr_ch (N - 1) + = 0, to the counters 22a and 22b. Thus, the counter 22a of the read pointer stops the increment. On the other hand, the write pointer is incremented by 1 in the counter 22b in synchronization with the input data as usual. At this moment, the channel N carries out a normal control in which control commands are wr_addr_ch (N) + = 1 and rd_addr_ch (N) + = 1.

If the delay amount is decreased with respect to the channel N - 1, the relation between each pointer and the delay amount of the channel N - 1 is wr_addr_ch (N-1) - rd_addr_ch (N - 1) > delay_ch (N - 1), and the pointer conditions are status0_ch (N - 1) = 1 and status1_ch (N - 1) = 0. Consequently, the control circuit 22d of the address counter 22-(N - 1) sends pointer control signals, wr_addr_ch (N - 1) + = 0 and rd_addr_ch (N - 1) + = 1, to the counters 22a and 22b. In response, the counter 22b of the write pointer stops the increment. On the other hand, the read pointer is incremented by 1 in the counter 22a in synchronization with the input data as usual. At this point, a gap is produced between the storage area of the channel N - 1 and that of the channel N, and thus the control circuit 22d of the channel N gives control signals, wr_addr_ch (N) + = 1 and rd_addr_ch (N) + = 0, to the counters 22a and 22b. As a consequence, the increment of the read pointer of the channel N is brought to a halt so that the gap may not be produced.

In a case that the delay amount is increased with respect to the channel N + 1, relation between each pointer and the delay amount of the channel N + 1 becomes wr_addr_ch (N + 1) - rd_addr_ch (N + 1) < delay_ch (N + 1) , and the pointer conditions are status0_ch (N + 1) = 0 and status1_ch (N + 1) = 1. Thus, the control circuit 22d of the address counter 22-(N + 1) transmits pointer control signals, wr_addr_ch (N + 1) + = 1 and rd_addr_ch (N + 1) + = 0, to the counters 22a and 22b. Accordingly, the counter 22a of the read pointer ceases the increment, while the write pointer is incremented by 1 in the counter 22b in synchronization with the input data as usual. At this moment, the area of the channel N + 1 is overwritten with the data of the channel N, so that the control circuit 22d of the channel N sends control signals, wr_addr_ch (N) + = 0 and rd_addr_ch (N) + = 1, to the counters 22a and 22b. In consequence, the increment of the write pointer of the channel N is discontinued, which prevents the overwriting.

If the delay amount is decreased with respect to the channel N + 1, the relation between each pointer and the delay amount of the channel N + 1 is wr_addr_ch (N + 1) - rd_addr_ch (N + 1) > delay_ch (N + 1), and the pointer conditions are status0_ch (N + 1) = 1 and status1_ ch (N + 1) = 0. Therefore, the control circuit 22d of the address counter 22-(N + 1) gives pointer control signals, wr_addr_ch (N + 1) + = 0 and rd_addr_ch (N + 1) + = 1, to the counters 22a and 22b. As a result, the counter 22b of the write pointer stops the increment, whereas the read pointer is incremented by 1 in the counter 22a in synchronization with the input data as usual. At this moment, the channel N is brought under normal control and transmits control signals, wr_addr_ch (N) + = 1 and rd_addr_ch (N) + = 1, to the counters 22a and 22b.

As described above, the present invention is designed to perform the delay of multiple audio channels in a single memory 21. Therefore, when the delay amount of one of the channels is small, it is possible to set the delay amount of the other channels to be large. Thus, usability of the memory is heightened.

Furthermore, the adjacent address counters (for instance, the address counters 22-0 and 22-1) have the pointer conditions in common to control the pointers of each channel as aforesaid, thereby averting the overwriting of data even if the delay amount is increased or decreased.

Also, if the pointers of each channel are controlled as stated above, the delay amount can be increased or decreased without flashing the data stored in the storage areas.

Moreover, if the delay amount is increased or decreased in the foregoing manner, the selectors 27-0 to 27-n select the outputs passing through the filters 26-0 to 26-n, which enables the smoothing of the sound data (e.g. analog signals D/A-converted from digital sound data) to be output.

The present invention, as explained above, is designed to store the sound data of a plurality of channels in a single memory by using the address information generated on the basis of an individual delay time set for each channel, thereby being capable of utilizing the memory capacity effectively.

Also, since the adjacent address information generators can share the same pointer conditions to control the pointers of each channel, even if the delay amount is increased or decreased, the flashing of data is not necessary, and moreover the overwriting of data can be avoided.

Additionally, filters make it possible to smooth the data (audio signal) to be output in cases where the delay amount is increased or decreased.

The foregoing is considered as illustrative only of the principles of the present invention. Furthermore, since numerous modifications and changes will readily occur to those skilled in the art, it is not desired to limit the invention to the exact construction and applications shown and described, and accordingly, the invention includes all suitable modifications and equivalents that may be regarded as falling within the scope of the appended claims.

## Claims

1. A sound data delay unit for delaying outputs of sound data input through a plurality of channels, comprising:
a memory for temporarily storing the sound data;
a plurality of address information generators each for receiving a delay amount assigned to a channel and generating address information for assigning a storage area in the memory for the sound data of the channel, based on the delay amount;
a first selector for selecting from the channels the sound data to be input into the memory;
a second selector for selecting the address information to be input into the memory;
a distributor for distributing to each channel the sound data stored in the memory and corresponding to the respective channels; and
a controller for controlling at least the memory, the first selector, the second selector and the distributor.

2. The sound data delay unit according to claim 1, wherein the address information is a write address or a read address with respect to each channel, or a pointer indicative of the write address or the read address.

3. The sound data delay unit according to claim 2, wherein the address information generators corresponding to adjacent channels have in common pointer conditions determined by comparing the delay amount of a channel to a current delay amount thereof.

4. The sound data delay unit according to claim 2, wherein each address information generator has a counter incrementing the address or the pointer in synchronization with input of the sound data.

5. The sound data delay unit according to claim 4, wherein the counter changes the frequency of the increment in accordance with an increase and a decrease in the delay amount.

6. The sound data delay unit according to claim 4, wherein the address information generators corresponding to adjacent channels have in common pointer conditions determined by comparing the delay amount of the channel to current delay amount thereof, and the counter changes the frequency of the increment in accordance with the pointer conditions.

7. The sound data delay unit according to claim 2, wherein an address information generator corresponding to an (N - 1)th channel informs an initial value of the write address to an address information generator corresponding to an Nth channel, and the address information generator corresponding to the Nth channel generates an initial value of an Nth read address, based on an initial value of an (N - 1)th write address.

8. The sound data delay unit according to claim 7, wherein the address information generator corresponding to the Nth channel generates the initial value of the Nth read address, and based on an Nth delay amount, generates an initial value of an Nth write address.

9. The sound data delay unit according to any preceding claim, having a filter for smoothing the sound data to be output when the delay amount is increased or decreased.

10. A method of adding delays to audio signals arranged in a plurality of channels, comprising the steps of:
temporarily storing the audio signals in a memory;
receiving a delay time assigned to each channel and generating address information for assigning a storage area of the audio signals of that channel in the memory, based on the delay time;
selecting from the channels the audio signals to be input into the memory;
selecting the address information to be input into the memory; and
distributing to each channel the audio signals stored in the memory and corresponding to the respective channels.
